# EUROPEAN PATENT SPECIFICATION

(11) **EP 3 896 499 B1**
(45) Date of publication and mention of the grant of the patent: **29.11.2023**
(21) Application number: 20315188.1
(22) Date of filing: 17.04.2020
(51) Int. Cl.: G02B 1/14, G02B 3/00, G02C 7/02, G02C 7/06

(54) **IMPROVED METHOD FOR FORMING AN OPTICAL ARTICLE COMPRISING MICROLENSES**
VERBESSERTES VERFAHREN ZUR FORMUNG EINES OPTISCHEN ARTIKELS MIT MIKROLINSEN
PROCÉDÉ AMÉLIORÉ POUR LA FORMATION D'UN ARTICLE OPTIQUE COMPRENANT DES MICROLENTILLES

(43) Date of publication of application: 20.10.2021
(73) Proprietor: ESSILOR INTERNATIONAL, 94220 Charenton-Le-Pont (FR)
(72) Inventor: Jiang, Peiqi, Dallas, Texas 75234 (US); Biteau, John, Dallas, Texas 75234 (US)
(74) Representative: Plasseraud IP

(56) References cited:
- EP-A1- 3 273 292
- EP-A1- 3 640 714
- WO-A1-2020/067028

## Description

### FIELD OF THE INVENTION

The invention relates to a method for forming an optical article comprising a base lens substrate having at least a microlens protruding from a surface thereof, and a hard coat covering encapsulating each microlens.

### BACKGROUND OF THE INVENTION

Optical articles such as lenses generally comprise a base-lens substrate which is shaped in order to provide a desired optical power, and an anti-abrasion coating covering at least one surface of the base-lens substrate to prevent the latter from being damaged by scratches.

An anti-abrasion coating, also known as hard coating, provides, according to a favorite embodiment with a bi-layered structure, a hardness gradient from the base-lens substrate to the free surface of the anti-abrasion coating. The upper layer of the coating defines the hardest part of the coating at the free surface thereof and allows a protection against thin particles and thin scratches, while the lower layer of the coating defines the less hard part underneath can absorb shocks provided by bigger particles and prevent formation of larger scratches. It also provides a transition with the hardness of the base-lens substrate to prevent formation of cracks at the interface between the substrate and the abrasion-resistant coating.

For a number of applications, it has been found desirable to provide on the base-lens substrate a plurality of microlenses, providing a local change of the power of the optical article. For instance, it is known from US 2017/0131567 a lens comprising a plurality of microlenses formed on a surface of the lens, the local change of power provided by the microlenses enabling to suppress or slow down the progress of myopia.

It is also known from document WO2016/168746 a lens having a first optical power, the lens comprising an array of microlenses having a second optical power, the microlenses allowing to increase the correction provided by the lens even though the curvature of the lens is limited, or allowing forming multifocal lenses with large areas of different optical powers while not exhibiting sharp steps that are visible at a micro-scale.

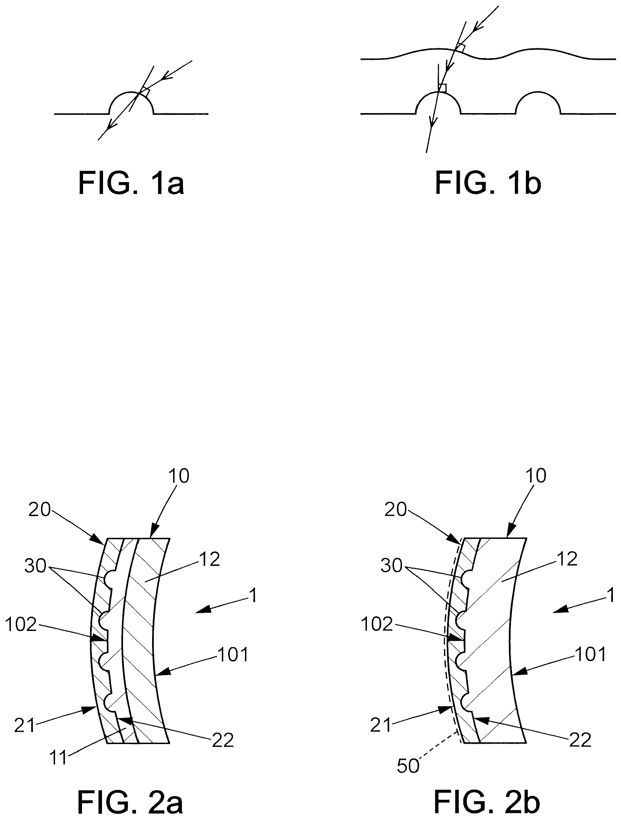

With reference to figures 1a and 1b, the covering of a lens having microlenses with an abrasion-resistant coating changes the power of the microlenses and therefore reduces or impairs the effect provided by the microlenses. Indeed, the thickness of a microlens is usually of about 1µm to 2µm while the typical thickness of an abrasion-resistant coating is of about 3 µm. Thus, when a surface comprising protruding elements such as microlenses is covered by abrasion-resistant coating (typically applied by dipping), the free surface of the abrasion-resistant coating is not exactly of the same curvature than that of the lens it covers. Instead, the presence of the protruding elements causes said free surface to exhibit local deformations of the surface.

As shown on figure 1b, a ray of light incident on one such deformation undergoes a first refraction when entering into the abrasion-resistant coating, and a second refraction at the interface with the microlens of the base-lens substrate, and therefore the path of the ray of light is changed as compared to its path if there was no abrasion-resistant coating (figure 1a). This alters the power of the microlenses. It has been measured that the power P of a microlens is reduced to a power P' of about P-0,8 diopters up to P-1,3 diopters when a microlens is covered with an abrasion-resistant coating.

A solution has been proposed consisting of reducing the thickness of the abrasion-resistant coating to reduce this alteration of the microlenses power. However, it has been measured that there still remains an alteration of the power since the local power P' of the microlenses covered with this coating is about P-0,5 (P being the initial power of the microlenses without coating). Furthermore, the properties of protection against scratching of the coating are highly reduced, so this solution is not satisfactory.

EP3640714, which is prior art under Article 54(3) EPC, discloses optical articles comprising encapsulated microlenses. WO 2020/067028 A1 describes a lens substrate having microlenses protruding from its surface.

### SUMMARY OF THE INVENTION

The purpose of the invention is to provide a solution to the defects in the prior art.

In particular, one aim of the invention is to provide an optical article comprising a base-lens substrate, an abrasion-resistant coating protecting said substrate, and at least one microlens, wherein the abrasion-resistant coating does not reduce or suppress the optical effect of the microlens.

The above-mentioned purpose is achieved by a combination of the characteristics described in the independent claims, and subordinate claims provide for specific advantageous examples of the invention.

A method for forming an optical article, is disclosed, the method comprising:
- providing a base lens substrate having opposite first and second optical surfaces, and at least one microlens protruding from the second optical surface,
- placing the base lens substrate in a mold comprising first and second mold portions such that the first optical surface is disposed on a molding surface of the first mold portion, and that a volume is defined between a molding surface of the second mold portion and the second optical surface,
- filling the volume with a moldable material suitable for forming abrasion resistant coating; and
- setting the moldable material to form an abrasion-resistant coating over the base lens substrate, wherein the abrasion resistant coating encapsulates each microlens.

In embodiments, the molding surface of the second mold portion has the same base curve as the base curve of the second optical surface of the base lens substrate.

In embodiments, the step of setting the material suitable for forming abrasion-resistant coating is performed by UV or thermal curing, or combination of both.

In embodiments, filling the volume with a moldable material comprises injecting the moldable material to fill the volume, or inserting in the volume the moldable material in a malleable state, and closing the mold to exert a pressure on the moldable material it order that it spreads over the base lens substrate.

In embodiments, the moldable material has an index of refraction n_{c} lower than the index of refraction nₘ of the material forming the microlens, and the difference between the index of refraction nₘ of the moldable material and the index of refraction n_{c}of the material forming the microlens may be greater or equal to 0,1.

In other embodiments, the moldable material may have an optical index n_{c} greater than the optical index nₘ of the material forming the microlens.

In embodiments, the method may further comprise depositing at least one additional coating on the abrasion-resistant coating, said additional coating comprising a polyurethane coating, an antireflective coating, a photochromic coating, an anti-smudge coating, an anti-fog coating, a tintable coating, a self-healing coating, an anti-rain coating, an anti-static coating, an anti-UV coating, or an anti-blue light coating.

In embodiments, the base-lens substrate may be a semi-finished lens and the method then further comprises surfacing and/or trimming the obtained coated lens.

In embodiments, the abrasion resistant coating has a first surface in contact with the base lens substrate and a second surface opposite the first, and each microlens of the base lens substrate is convex, the first surface of the abrasion resistant coating is concave, and the second surface of the abrasion resistant coating is convex.

In embodiments, providing the base lens substrate comprises:
- moving first and second primary mold portions of a primary mold from an open position to a closed position in which the primary mold portions cooperate to define a first mold cavity, each of the primary mold portions defining a molding surface;
- introducing a first moldable material into the first mold cavity;
- setting the first moldable material to form the base lens substrate having the opposite first and second optical surfaces, wherein the molding surface of the second primary mold portion defines at least one recess suitable for forming the at least one microlens protruding from its second optical surface.

An optical article is also disclosed, comprising:
- a base lens substrate, having two opposite main surfaces, the base lens substrate comprising at least one microlens protruding from one of the main surfaces, and
- an abrasion resistant coating, covering at least the main surface from which the microlens protrudes, such that the abrasion resistant coating encapsulates each microlens,
wherein the optical article is obtained by implementing the method according to the above description.

In embodiments, the thickness of the abrasion resistant coating is minimal at the protruding microlens. The minimal thickness of the abrasion resistant coating, at the protruding microlens may be inferior or equal to 2µm, preferably comprised between 1 and 2 µm.

In embodiments, each protruding microlens has a dimension, measured in a direction perpendicular to the surface carrying it, less than 0.1 mm, preferably comprised between 10 and 20 µm.

The method for forming an optical article according to an embodiment of the present disclosure comprises molding an abrasion-resistant coating over an optical member comprising at lease a protruding microlens, so that the abrasion-resistant coating encapsulates each microlens.

Since the abrasion-resistant coating is formed by molding instead of dipping, it allows controlling its shape, so that its free surface is exactly the same as that of the surface of the base lens substrate it covers, and has the same base curve. As a consequence, the shape of each microlens and its optical power are not impaired by the coating, and therefore the detrimental effects disclosed before related to the deposition of the coating do not happen.

In embodiments, the materials forming respectively the abrasion-resistant coating and the microlens are selected to provide a gap of index of refraction of at least 0.1, the abrasion-resistant material having an index of refraction lower than the index of refraction of the material forming the microlens. This index gap allows obtaining the desired optical power for the microlens without increasing the maximum height of the microlens, i.e. maintaining the height of the microlens under 2 µm and preferably between 1 and 2 µm.

### DESCRIPTION OF THE DRAWINGS

For a more complete understanding of the description provided herein and the advantages thereof, reference is now made to the brief descriptions below, taken in connection with the accompanying drawings and detailed description, wherein like reference represent like parts.

Figures 1a and 1b, which have already been described, depicts the impact of an abrasion-resistant coating covering a substrate comprising microlenses on the path of an incoming ray of light.

Figures 2a and 2b schematically show examples of an optical article obtained through implementation of the manufacturing method.

Figures 3a to 3e schematically show the main steps of a method for manufacturing an optical article according to an embodiment.

### DETAILED DESCRIPTION OF AN EMBODIMENT

### Optical article comprising microlenses

With reference to figures 2a and 2b, an optical article 1 according to embodiments of the invention will now be described. The optical article 1 comprises a base lens substrate 10 and an abrasion-resistant coating 20 covering a main-surface of the base lens substrate 10.

The base lens substrate 10 may comprise a single layer or may be formed of a laminate. The base lens substrate 10 preferably comprises at least a plano wafer 11, or a base lens 12 providing optical power, or both, i.e. a base lens 12 providing optical power and a wafer 11 complementing the base lens 12 with an optical function as described below. In the example shown in figure 2a, the base-lens substrate 10 comprises a piano wafer 11 and a base lens 12. In the example shown in figure 2b, the base-lens substrate 10 only comprises a base lens 12.

A plano wafer 11 has no optical power and hence provides no correction to the wearer, but acts as a mechanical support for other layers, and optionally also provides one or more functional properties to the finished optical article, such as at least one among the following optical functions:
- Amplitude filtering function,
- Spectral filtering function (such as edgepass like shortpass or longpass, or bandpass filtering, or filtering of specific colors, for instance by tinting, or incorporating photochromic or electrochromic functions, UV absorption, mirror, etc.),
- Polarization function.

A plano wafer 11 refers to a film structure formed by either a single film layer or a film laminate structure formed of multiple film layers attached to one another. More precisely, the plano wafer 11 may be formed by one or several ophthalmic-grade function film (with for example polar or photochromic properties), optionally having an ophthalmic-grade protective film on one or both sides of the ophthalmic grade functional film.

A plano wafer 11 may exhibit a thickness in the range of 20 to 700 micrometers, preferably 30 to 600 µm. The protective layer(s), if any, may have a thickness of about 50 µm.

Suitable transparent resin film or sheet materials for forming the piano wafer (including functional and protective films) include poly(vinyl alcohol) (PVA) or cellulose acylate-based materials, for example, cellulose diacetate and cellulose triacetate (TAC). Other usable wafer materials can include polycarbonate, polysulfone, cellulose acetate buturate (CAB) or cyclic oleofin copolymer (COC), polyacrylate, polyester, polystyrene, copolymers of acrylate and styrene, and poly(vinylalcohol) (PVA). Polycarbonate-based materials include, for example, polybisphenol-A carbonate; homopolycarbonate such as 1,1' dihroxydiphenyl-phenylmethylmethane, 1,1 '-dihroxydiphenyl-diphenylmethane, 1,1'-dihydroxy-3,3'-dimethyl diphenyl-2,2-propane, their mutual copolymer polycarbonate and copolymer polycarbonate with bisphenol-A.

The base lens 12 may be formed in organic eyeglass, for example made of thermoplastic or thermosetting plastic. In particular, thermoplastic materials may be selected from, for instance: polyamides, polyimide, polysulfones, polycarbonates and copolymers thereof, polyethylene terephtalate) and polymethylmethacrylate (PMMA).

Thermosetting materials may be selected from, for instance: cycloolefin copolymers such as ethylene/norbornene or ethylene/cyclopentadiene copolymers ; homo- and copolymers of allyl carbonates of linear or branched aliphatic or aromatic polyols, such as homopolymers of diethylene glycol bis(allyl carbonate) (CR 39^{®}) ; homo- and copolymers of (meth)acrylic acid and esters thereof, which may be derived from bisphenol A ; polymer and copolymer of thio(meth)acrylic acid and esters thereof, polymer and copolymer of allyl esters which may be derived from Bisphenol A or phtalic acids and allyl aromatics such as styrene, polymer and copolymer of urethane and thiourethane, polymer and copolymer of epoxy, and polymer and copolymer of sulphide, disulfide and episulfide, and combinations thereof. As used herein, a (co)polymer is intended to mean a copolymer or a polymer. As used herein, a (meth)acrylate is intended to mean an acrylate or a methacrylate.

Examples of substrates to be suitably used in the present invention include those obtained from MR6^{®}, MR7^{®}, MR8^{®}, MR174 ^{®} and MR10^{®} resins (thermosetting polythiourethane resins). The various substrates based on polythiourethane resins are marketed by the Mitsui Toatsu Chemicals company and these substrates as well as the monomers used for their preparation are especially described in the patents U.S. Pat. No. 4,689,387, U.S. Pat. No. 4,775,733, U.S. Pat. No. 5,059,673, U.S. Pat. No. 5,087,758 and U.S. Pat. No. 5,191,055.

The base lens 12 is preferably shaped to provide optical power suitable for correcting a wearer ametropia, for instance myopia or hyperopia. The base lens 12 may be monofocal or multifocal such as a multifocal progressive lens.

The base substrate 10 may comprise other layers in addition to the base lens 12 and/or plano wafer 11, such as for instance photochromic trans-bonding^{®} layer on a front surface of a base lens 12, or any additional layer which can be deposited on the base lens or plano wafer and which incorporates an optical function such that :
- Amplitude filtering function,
- Spectral filtering function (such as edgepass like shortpass or longpass, or bandpass filtering, or filtering of specific colors, for instance by tinting, or incorporating photochromic or electrochromic functions, UV absorption, mirror, etc.),
- Polarization function.

The base-lens 12 may also be a semi-finished lens which means that it does not provide the final power, also called target power, of the lens that is to be manufactured from the semi-finished lens. It may provide a power which is not the target power, said target power being obtained by later surfacing of the semi-finished lens.

The base-lens 12 may also be a lens which is not trimmed, which means that its peripheral shape has not been adjusted to the shape of a frame in which it will then be inserted.

As shown in figures 2a and 2b, the base lens substrate 10 comprises two opposite main surfaces comprising a back surface 101 and a front surface 102. In the example of figure 2a, the front surface 102 of the base-lens substrate 10 is formed by a front surface of a plano wafer 11, whereas in the example of figure 2b, the front-surface 102 of the base-lens surface 10 is formed by a front surface of a lens 12.

The optical article 1 further comprises at least one microlens 30 protruding from one of the main surfaces of the base lens substrate 10. In preferred embodiments, each microlens 30 protrudes from the front surface 102 of the base-lens substrate 10.

By "protruding" is meant that each microlens projects from the surface of the base lens substrate 10, outwardly, i.e. away from said substrate. Each microlens is therefore convex.

In one embodiment, each microlens 30 is formed of the same material as the base lens substrate 10 and may be formed integral with the latter. If the base lens substrate 10 is a laminate, each microlens 30 may be formed of the same material that the layer from which is protrudes.

In what follows, a microlens is a discrete optical element of microscopic scale, inducing a local change in optical power of the optical device.

In one embodiment, the microlenses are configured so that at least along one section of the lens the mean sphere of the microlenses increases from a point of said section towards the peripheral of said section.

According to an embodiment the optical elements are configured so that at least along one section of the lens, for example at least the same section as the one along which the mean sphere of the optical elements increases, the mean cylinder increases from a point of said section, for example the same point as for the mean sphere, towards the peripheral part of said section.

A microlens may be spherical, toric, or have an aspherical shape. A microlens may have a single focus point, or cylindrical power, or non-focusing point. In preferred embodiments, microlenses can be used to prevent progression of myopia or hyperopia. In that case, the base lens substrate comprises a base lens 12 providing an optical power for correcting myopia or hyperopia, and the microlenses may provide respectively an optical power greater than the optical power of the base lens 12 if the wearer has myopia, or an optical power lower than the optical power of the base lens 12 if the wearer has hyperopia.

In the sense of the present disclosure, a "microlens" has a contour shape being inscribable in a circle having a diameter greater than or equal to 0.8 mm and smaller than or equal to 3.0 mm.

For example, the microlenses may be regularly distributed along circles centered on the optical center of the refraction area.

The mean cylinder of the different micro lenses may be adjusted based on the shape of the retina of the person.

The refraction area may comprise a far vision reference point, a near vision reference, and a meridian line joining the far and near vision reference points. For example, the refraction area may comprise a progressive additional lens design adapted to the prescription of the person or adapted to slow down the progression of the abnormal refraction of the eye of the person wearing the lens element.

The meridian line corresponds to the locus of the intersection of the main gaze direction with the surface of the lens.

Preferably, according to such embodiment, the optical elements are configured so that in standard wearing conditions along any horizontal section of the lens, when worn by a wearer, the mean sphere and/or the mean cylinder of the microlenses increases from the intersection of said horizontal section with the meridian line towards the peripheral part of the lens.

The mean sphere and/or the mean cylinder increase function along the sections may be different depending on the position of said section along the meridian line.

In particular, the mean sphere and/or the mean cylinder increase function along the sections are unsymmetrical. For example, the mean sphere and/or the mean cylinder increase function are unsymmetrical along vertical and/or horizontal section in standard wearing conditions.

At least one of the microlens, has an optical function of not focusing an image on the retina of the eye of the person when the lens element is worn in standard wearing conditions.

Advantageously, such optical function of the microlens combined with a refractive area having at least one refractive power different from the refractive power of the prescription allows slowing down the progression of the abnormal refraction of the eye of the person wearing the lens element.

The microlenses may be non-contiguous.

In the sense of the present disclosure two microlenses are non-contiguous if for all the paths linking the two microlenses one may measure at least along part of each path the refractive power based on a prescription for the eye of the person.

When the two microlenses are on a spherical surface, the two microlenses are non-contiguous if for all the paths linking the two optical elements one may measure at least along part of each path the curvature of said spherical surface.

According to an embodiment, at least one of the microlenses has an optical function of focusing an image on a position other than the retina.

Preferably, at least 50%, for example at least 80%, for example all, of the microlenses have an optical function of focusing an image on a position other than the retina.

According to an embodiment, at least one of the microlenses has a non-spherical optical function.

Preferably at least 50%, for example at least 80%, for example all, of the microlenses have a non-spherical optical function.

In the sense of the present disclosure, a "non-spherical optical function" is to be understood as not having a single focus point.

The at least one microlens having a non-spherical optical function is transparent.

One can add these microlenses on a defined array like circle, square or hexagonal or random or other.

The microlenses may cover specific zones of the lens element, like at the center or any other area.

The optical element density or the quantity of power may be adjusted depending on zones of the base lens substrate. Typically, the microlenses may be positioned in the periphery of the base lens substrate, in order to increase the effect of the optical element on myopia control, so as to compensate peripheral defocus due to the peripheral shape of the retina for example.

According to an embodiment, at least one, for example all, of the microlenses has a shape configured so as to create a caustic in front of the retina of the eye of the person. In other words, such microlens is configured so that every section plane where the light flux going through said microlens is concentrated if any, is located in front of the retina of the eye of the person, either in a punctual way in a plane or never in a punctual manner in none of those section plane.

According to an embodiment, the at least one, for example all, of the microlenses having a non-spherical optical function is a multifocal refractive micro-lens.

In the sense of the present disclosure, a microlens being a "multifocal refractive micro-lens" includes bifocals (with two focal powers), trifocals (with three focal powers), progressive addition lenses, with continuously varying focal power, for example aspherical progressive surface lenses.

According to an embodiment, the at least one multifocal refractive micro-lens has a toric surface. A toric surface is a surface of revolution that can be created by rotating a circle or arc about an axis of revolution (eventually positioned at infinity) that does not pass through its center of curvature.

Toric surface lenses have two different radial profiles at right angles to each other, therefore producing two different focal powers.

Toric and spheric surface components of toric lenses produce an astigmatic light beam, as opposed to a single point focus.

According to an embodiment, the at least one of the microlenses having a non-spherical optical function, for example all, of the optical elements is a toric refractive micro-lens. For example, a toric refractive micro-lens with a sphere power value greater than or equal to 0 diopter (δ) and smaller than or equal to +5 diopters (δ), and cylinder power value greater than or equal to 0.25 Diopter (δ).

As a specific embodiment, the toric refractive microlens may be a pure cylinder, meaning that minimum meridian line power is zero, while maximum meridian line power is strictly positive, for instance less than 5 Diopters.

According to an embodiment, at least one, for example all of the microlenses, has an optical function with high order optical aberrations. For example, the microlens is composed of continuous surfaces defined by Zernike polynomials.

Each microlens can have a maximum height, e.g., measured in a direction perpendicular to the surface from which it protrudes, that is less than or equal to 0.1 millimeters (mm), such as, for example, less than or equal to or between any two of 100 micrometers (µm), 90 µm, 80 µm, 70 µm, 60 µm, 50 µm, 40 µm, 30 µm, 20 µm, 10 µm, 5 µm, 1 µm, or smaller. In embodiments, as explained below, each microlens has a maximum height preferably comprised between 1µm and 20 µm, for instance equal to 11µm or 15 µm. Each microlens can have a diameter, respectively, that is less than or equal to 2.0 mm, such as, for example, less than or equal to or between any two of 2.0 mm, 1.5 mm, 1.0 mm, 0.5 mm, 0.1 mm, 80 µm, 60 µm, 40 µm, 20 µm, or smaller. For example, the diameter may between 2.0mm and 0.5 mm, for example about 1.1mm.

Back to figures 2a and 2b, one can notice that the surface of the base-lens substrate carrying the microlenses 30, typically the front surface 102, is convex and is formed by two kinds of outer surfaces: a first one is the outer surface of each optical element, comprising local curvature variations due to the shape of the microlenses, whereas the second one is the surface of the base lens substrate disposed between the microlenses, which exhibits fewer or even no local curvature variations. Preferably, the difference induced by a local curvature variation of a microlens compared to the surrounding second kind of surface is at least 1 D.

The base lens substrate therefore exhibits a thickness in average greater at the microlens than away from them, and the maximum thickness of the substrate is reached at the point of maximum thickness of the microlenses.

The abrasion resistant coating 20 has the role of protecting the base lens substrate 10 from scratches and abrasion. It is also conventionally called Hard-Coating, or HC.

The abrasion-resistant coating can be any layer conventionally used as abrasion-resistant coating in the field of ophthalmic lenses, and which can be cast or used in a press coating process.

Hard abrasion-resistant and/or scratch-resistant coatings are preferably prepared from compositions comprising at least one alkoxysilane and/or one hydrolyzate of the latter obtained, for example, by hydrolysis with a hydrochloric acid solution. After the hydrolysis stage, the duration of which is generally between 2 h and 24 h, preferably between 2 h and 6 h, catalysts can optionally be added. A surface-active compound is preferably also added in order to promote the optical quality of the deposit.

Mention may be made, among the coatings recommended in the present invention, of coatings based on epoxysilane hydrolyzates, such as those described in the patents EP 0 614 957, US 4 211 823 and US 5 015 523.

A preferred composition for an abrasion-resistant coating is that disclosed in the patent FR 2 702 486 on behalf of the applicant. It comprises an epoxytrialkoxysilane and dialkyldialkoxysilane hydrolyzate, colloidal silica and a catalytic amount of aluminum-based curing catalyst, such as aluminum acetylacetonate, the remainder being essentially composed of solvents conventionally used for the formulation of such compositions. Preferentially, the hydrolyzate used is a γ-glycidoxypropyltrimethoxysilane (GLYMO) and dimethyldiethoxysilane (DMDES) hydrolyzate or else a γ-glycidoxypropyltrimethoxysilane (GLYMO) and triethyl orthosilicate (TEOS) hydrolyzate.

The abrasion-resistant coating may also be formed of a cross-linkable thermosetting material, or composite material.

The abrasion resistant coating 20 can be a bi-layered structure forming a hardness gradient from the base-lens substrate 10 to the free surface of the anti-abrasion coating. The upper layer of the coating defines the hardest part of the coating at the free surface thereof and allows a protection against thin particles and thin scratches, while the lower layer of the coating defines the less hard part underneath, able to absorb shocks provided by bigger particles and prevent formation of larger scratches.

Such bi-layered structure of hard coat can be the one of the structures disclosed in the document EP 2 092 377.

Compositions of materials suitable for forming abrasion resistant coating may be found in document US2007238804.

In embodiments, non-standard formulations of abrasion resistant coatings which are more compatible with overmolding, may be used. Such formulations are devoid of solvents and not based on condensation reaction (such as hydrolyzed silanes used to form siloxanes). Such formulations could thus be based on addition reaction such as photo or thermal polymerization of acrylics, like is the case of the material MY-146-R2 commercialized by the company MYPolymers.

The abrasion-resistant coating 20 covers the surface of the base-lens substrate 10 from which each microlens 30 protrudes, such that each microlens is fully encapsulated by the abrasion-resistant coating 20. The abrasion-resistant coating 20 therefore has a first surface 22 in contact with the base-lens substrate 10 and each microlens protruding thereof, and a second surface 21, opposite the first. In embodiments, and as shown in figures 2a and 2b, the abrasion-resistant coating 30 covers the front surface 102 of the base-lens-substrate. In that case, the interface between the coating 20 and the base lens substrate 10 is thus formed by a back surface 22 of the coating 20 and the front surface 102 of the base lens substrate.

The surface of the abrasion-resistant coating at the interface with the base lens substrate is concave. On the other hand, the second surface of the abrasion resistant coating, which is the free surface of the coating 20, is convex and smooth, and exhibits the same base curve as the base curve of the surface of the base lens substrate 10 bearing the microlenses, thanks to the manufacturing method of the abrasion-resistant coating, as will be disclosed in more details below.

As the abrasion-resistant coating fully encapsulates the microlenses, it exhibits a maximum thickness, measured in a direction perpendicular to the surface of the base lens substrate 10 bearing the microlenses 30, that is larger than the maximum height of the microlenses as measured from said surface. The maximum thickness of the abrasion-resistant coating can be less than or equal to or between any two of 200 micrometers (µm), 150µm, 100 µm, 90 µm, 80 µm, 70 µm, 60 µm, 50 µm, 40 µm, 30 µm, 20 µm, 10 µm or smaller while being greater than the maximum height of the microlenses. Furthermore, the minimum thickness of the abrasion resistant coating is measured at the microlenses, and more specifically at the point of maximal height of the microlenses. At this point the minimum thickness of the abrasion resistant coating, measured at the point of maximal height of the microlenses and from that point, may be inferior or equal to the height of the microlenses at that point, and inferior or equal to a height of 10µm, whichever is the highest, preferably inferior or equal two-third or even half the microlens height, preferably inferior or equal to 2 µm, for instance comprised between 1 and 5 µm.

Moreover, the indices of refraction of the material forming the microlens(es) 30 and of the material forming the abrasion-resistant coating 20 are different in order to allow the change of local power incurred by the microlenses to occur.

According to an embodiment, the index of refraction n_{c} of the material forming the abrasion-resistant coating is lower than the index of refraction nₘ of the material forming the microlenses. In embodiments, The index n_{c} of the material forming the abrasion-resistant coating is lower than the index nₘ such that the difference nₘ - n_{c} is greater than 0.09, preferably greater than 0.1, 0.3, or even greater than 0.5. Indeed, for a microlens of a given diameter and a given desired optical power, the addition of an abrasion-resistant coating tends to increase the maximum height of the microlens which is required to achieve said optical power. On the other hand, the more important the difference in refractive index between the material forming the abrasion-resistant coating and the material forming th emicrolens(es), the lower is said needed maximum height, and in turn the easier is the base-lens substrate and its microlenses to manufacture.

A non limiting example is given of a base-lens substrate comprising protruding microlenses of a diameter of 1.12 mm, where the material forming the microlenses is polycarbonate. In order to achieve a power of 3.5 dp for a base-lens substrate devoid of abrasion resistant covering, the index gap between air and polycarbonate being 0.591, the maximum height of the microlenses is 0.93. In order to achieve the same power, for an abrasion-resistant coating made of a material having a refraction index of 1.52, the index gap between the coating and the microlens is of 0.071 and the maximum height of the microlenses raises to 7.73 µm. In some cases, for about 5dp microlenses, with an index gap of 0.071, it might be needed to have microlenses with a height of about 11 to 15 µm.

According to another exemplary embodiment, the material forming the microlens can be chosen as bisphenol-A-polycarbonate, having a refractive index of 1.591. The material forming the abrasion-resistant coating may be a crosslinkable thermoset containing no solvent, such as the reference MY-146-R2 commercialized by the company MYPolymers. Its refractive index is about 1.465, which provides a difference in refractive index of about 0.126.

Another material forming the abrasion-resistant coating and having an index of 1.49 (thus able to provide an index gap of more than 0.1) may be the composition of example 3 of patent EP0614957 which recites as follows in said patent : "80 parts of 0.1N hydrochloric acid were added dropwise to a solution containing 224 parts of GLYMO and 120 parts of DMDES. The hydrolysed solution was stirred fo 24 hours at room temperature and then 718 parts of 30% colloidal silica in methanol, 15 parts of aluminium acetylacetonate and 44 parts of ethylcellosolve were added. A small amount of surfactant was added. The TDC of the composition was in the order of 13% of solid material from the hydrolyzed DMDES."GLYMO being defined in said patent as g-Glycidoxypropyltrimethoxysilane. DMDES being defined in said patent as Dimethyldiethoxysilane. TDC signifies the theoretical dry content. The total dry content obtained was of roughly 35% of the composition.'

The following examples may also be selected for achieving the abrasion resistant coating.

### Coating example 1:

The hard coat has a refractive index of 1.47 and is nano-composite photo-curable hard coat containing acrylic monomers and silica nanoparticles.

The vinyltrimethoxysilane (32.1g) is added to the trimethylolpropanetriglycidyl ether (20.1g), 1,6-hexanedioldiacrylate (8.3g) and dipentaerythritol hexaacrylate (20.8g) in bottle opaque for UV. This mixture is stirred until homogenous. Next, the UVI-6976 (Triarylsulfonium hexafluorantimonate, 0.8g)), the UVI-6992 (Triarylsulfonium hexafluorophosphate, 0.3g), Darocur 1173 (2-hydroxy-2-methylpropiophenone, 1.6g), and Irgacure 819 (Phenylbis 2,4,6-trimethylbenoyl)phophine oxide, 0.4g) are added along with the surfactants, EB-1360 (0.8g) and FC4434 (0.6g). The mixture is again mixed until homogenous. The Nanocryl C-150 (50% nanosilica dispersed in trimethylol propane triacrylate - TMPTA, 10.3g) is added last and the coating is allowed to mix overnight prior to filtering. The coating is then ready for application & UV curing.

The refractive index of the coating after UV curing is ~1.47.

### Coating example 2:

The lens with microstructures is made of PC, and has a refractive index of 1.595.

The hard coat has a refractive index of 1.40 or lower and is a nano-composite photo-curable hard coat containing acrylic monomers and hollow silica dispersion, the mixture was heated for 4h under reflux. The surface-modified nanoparticles were then dispersed in 1-methoxy-2-propanol (by centrifugation).

The surface modified hollow silica nanoparticles dispersed in 1-methoxy-2-propanol were mixed with the UV-curable monomer 1,6-hexanediol diacrylate. The photoinitiator Irgacure 907 was added at 5%wt (the monomer representing 95%wt).

After deposition (by one of the processes described in the previous embodiments), the coating is heated at 80C for 2min, and then UV cured for 5s to 60s (depending on the thickness).

The modified hollow silica nanoparticles represent 60%wt in the final coating. The refractive index of the coating (at 633nm) is 1.38.

### Coating example 3:

The formulation is similar to the one in example 2, but the surface modified hollow silica nanoparticles represent 40% wt in the final coating. The refractive index (at 633nm) is 1.43.

The abrasion resistant coating may contain particles, such as nano particles, chosen so as to reduce its refractive index. Accordingly, silica particles of index ranging from 1.4 to 1.5 may be added to reduce the index of an abrasion resistant coating of natural refractive index of about 1.49 ; an example may be Nanocryl C-150 (50% nanosilica dispersed in trimethylol propane triacrylate - TMPTA. Another possibility to even further reduce the refractive index of the hard coat while maintaining the abrasion resistance properties, may be to introduce hollow nanoparticles, such as hollow silica nanoparticles, which are known to have an index ranging from 1.04 to 1.4 depending on the manufacturing process ; an example of compatible hollow silica nanoparticles could be Thrulya, colloidal hollow silica nanoparticles produced by JGC C&C. Alternatively, silica and hollow silica nanoparticles may be used in combination. Thus, Hard coatings of index below 1.4 may be reached.

In another embodiment, the index of refraction n_{c} can also be greater than the index of refraction nₘ of the optical elements.

In both cases the difference in refraction index between the abrasion resistant coating 20 and the microlenses 30 may induce reflections at the interface between the abrasion resistant coating and the surface bearing the microlenses. The optical article 1 then preferably comprises a quarter-wave layer 40 at the interface between the base lens substrate 10 and the optical elements 30, suitable for reducing the amount of reflections. A quarter wave layer (also noted as λ/4 layer) having a refraction index RI = (n_{c}.nₘ)^{1/2} may for instance be used.

A detailed example of λ/4 layer is disclosed in patent US7008690 of the applicant.

Last, in reference with figure 2b the optical article 1 can comprise one or more coating(s) on each of the front surface and back surface thereof. For instance, the front surface of the abrasion resistant layer can be covered with at least one additional coating 50, including one or more of the following: a polyurethane coating, an antireflective coating, a photochromic coating, an anti-smudge coating, an anti-fog coating, a tintable coating, a self-healing coating, an anti-rain coating, an anti-static coating, an anti-UV coating, or an anti-blue light coating.

### Manufacturing method of an optical article

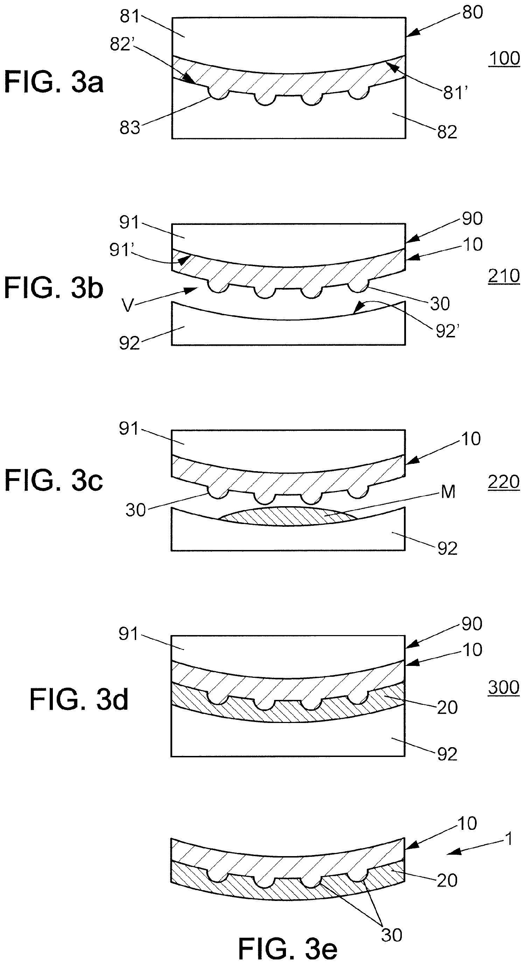

With reference to figures 3a to 3e, a method for forming the optical article described above will now be disclosed.

The method comprises providing 100 a base-lens substrate 10 having first 101 and second surfaces 102, and carrying, on one of its surfaces, and preferably on its front surface, at least one microlens 30 protruding from said surface.

The base-lens substrate 10 having at least a protruding microlens may be obtained by injection molding, as shown in figure 2a.

In that case, a same material is used for forming the base-lens substrate 10, or at least a layer of the base-lens substrate carrying the microlenses 30, and the microlenses 30. Said molding thus comprises providing a primary mold 80 comprising first 81 and second 82 primary mold portions, wherein each of the first and second primary mold portions defines a molding surface 81', 82'. As visible on figure 3a, a first primary mold portion 81 exhibits a molding surface which corresponds to one of the opposite surfaces of the base-lens substrate devoid of microlens. The molding surface thus has a base curve equal to the base curve of said surface of the base lens substrate.

A second primary mold portion 82 exhibits a molding surface 82' defining at least one recess 83, which will allow formation by molding of a microlens of complementary shape.

The molding step of the base-lens substrate thus comprises moving the first and second primary mold portions of the primary mold from an open position to a closed position in which the primary mold portions cooperate to define a first mold cavity, introducing a moldable material into the first mold cavity, where the moldable material is suitable for forming the base-lens substrate and the optical element.

Then, the molding step comprises setting the moldable material to form the base lens substrate 10 having the opposite first and second main surfaces, corresponding to the molding surfaces 81', 82' of the primary mold portions, wherein each recess 83 defined by the molding surface of the second primary mold portion forms the microlens 30 protruding from the surface of the base lens substrate.

According to another embodiment, a base-lens substrate 10 devoid of any protruding microlens 30 may be formed, and each optical element 30 may be formed on one of the surfaces, preferably the front surface, of the base-lens substrate, for instance by additive manufacturing. According to still another embodiment, the base-lens substrate comprising the microlenses may be obtained by direct machining.

The method for forming an optical article 1 then comprises molding 200 the abrasion-resistant coating over the surface of the base-lens substrate carrying the optical elements, such that the abrasion-resistant coating encapsulates said optical elements. This molding step can be performed by casting or press coating.

In any case, with reference to figure 2b, this molding step comprises placing 210 the base-lens substrate comprising the protruding optical elements in a second mold 90, comprising first 91 and second 92 mold portions, such that the surface of the base-lens substrate 10 devoid of microlens is disposed on a molding surface 91' of the first mold portion 91, and a volume V is defined between the molding surface 92' of the second mold portion 92 and the surface of the base lens substrate carrying the microlenses. The second mold portion 92 has the same base curve as the main surface of the base-lens substrate 10 carrying the microlens. If the base-lens substrate 10 has been obtained by molding, it is also the same base curve that the base curve of the second primary mold portion 82. The first mold portion 91 has the same base curve as the surface of the base lens devoid of microlenses, or if the base-lens substrate 10 has been obtained by molding, it is also the same base curve that the base curve of the first primary mold portion 81.

The volume is then filled 220 with a moldable material M which is suitable for forming abrasion resistant coating (see list detailed above). In the embodiment where the coating is formed by casting, the volume defined between the molding surface of the second mold portion and the surface of the base lens substrate carrying the optical element corresponds to the volume occupied by the abrasion resistant coating once molded. In that case, the moldable material is injected so as to fill in the volume.

In the embodiment where the coating is formed by press coating, and schematically shown on figure 3c, the volume V in the mold is slightly larger than that occupied by the abrasion resistant coating once molded. In that case the moldable material is inserted, in a malleable state, in the volume V, and deposited on the surface of the base-lens substrate comprising the microlens. The second mold 90 is then closed, thereby progressively exerting a pressure over the material M, in order to make it spread over the surface of the base-lens substrate in such a way as to create an intimate contact between the material and the base-lens substrate 10 carrying the microlenses 30, until the moldable material encapsulates the optical elements. Further, in the case of press coating, the first mold portion 91 may be replaced by a holding support for holding the base lens substrate 10

In any case, the molding of the abrasion resistant coating then comprises setting 300 the moldable material forming the abrasion resistant coating in order to form said coating 20. This setting step, schematically shown on figure 3d, may be performed by UV or thermal curing, or combination of both. According to the embodiment disclosed above in which the base lens substrate may be made out of bisphenol-A-polycarbonate and the material forming the abrasion-resistant coating may be made of crosslinkable thermosetting material, the curing may be UV curing with a UV source tuned to ensure a dose of 1200 to 1300 mJ/cm².

The mold is then removed, as shown in figure 3e, revealing an optical article 1 with an abrasion-resistant coating 20 having a smooth surface of the base curve of the main surface of the base-lens substrate carrying the microlenses.

In embodiments, the method for manufacturing the optical article may further comprise additional steps (not shown) such as depositing at least one additional coating on the abrasion-resistant coating, and possibly and the main surface of the base-lens substrate 10 that is devoid of microlenses, said additional coating comprising a polyurethane coating, an antireflective coating, a photochromic coating, an anti-smudge coating, an anti-fog coating, a tintable coating, a self-healing coating, an anti-rain coating, an anti-static coating, an anti-UV coating, or an anti-blue light coating. The main surface of the base-lens substrate devoid of micro-lens may also be coated with an abrasion-resistant coating. If the base-lens substrate 10 is or comprise a semi-finished lens, the method may further comprise finishing steps including surfacing the semi-finished lens to obtained the desired target power, and/or trimming the obtained lens.

## Claims

1. A method of forming an optical article (1), the method comprising:
providing (100) a base lens substrate (10) having opposite first (101) and second (102) optical surfaces, and at least one microlens (30) protruding from the second optical surface (102),
placing (210) the base lens substrate (10) in a mold (90) comprising first (91) and second (92) mold portions such that the first optical surface (101) is disposed on a molding surface (91') of the first mold portion (91), and that a volume (V) is defined between a molding surface (92') of the second mold portion (92) and the second optical surface (102),
filling (220) the volume (V) with a moldable material (M) suitable for forming abrasion resistant coating; and
setting (300) the moldable material to form an abrasion-resistant coating (20) over the base lens substrate (10), wherein the abrasion resistant coating (20) encapsulates each microlens (30).

2. A method according to claim 1, wherein the molding surface (92') of the second mold portion (92) has the same base curve as the base curve of the second optical surface (102) of the base lens substrate (10).

3. A method according to claim 1 or 2, wherein the step of setting the material suitable for forming abrasion-resistant coating is performed by UV or thermal curing, or combination of both.

4. A method according to any of the preceding claims, wherein filling the volume with a moldable material comprises injecting the moldable material to fill the volume, or inserting in the volume the moldable material in a malleable state, and closing the mold to exert a pressure on the moldable material it order that it spreads over the base lens substrate.

5. A method according to claim 1 to 4, wherein the moldable material has an index of refraction n_{c} lower than the index of refraction nₘ of the material forming the microlens.

6. A method according to claim 5, wherein the difference between the index of refraction nₘ of the moldable material and the index of refraction n_{c} of the material forming the microlens is greater or equal to 0,1.

7. A method according to any of claims 1 to 4, wherein the moldable material has an optical index n_{c} greater than the optical index nₘ of the material forming the microlens.

8. A method according to any of the preceding claims, further comprising depositing at least one additional coating (50) on the abrasion-resistant coating (20), said additional coating comprising a polyurethane coating, an antireflective coating, a photochromic coating, an anti-smudge coating, an anti-fog coating, a tintable coating, a self-healing coating, an anti-rain coating, an anti-static coating, an anti-UV coating, or an anti-blue light coating.

9. A method according to any of the preceding claims, wherein the base-lens substrate (10) is a semi-finished lens and the method further comprises surfacing and/or trimming the obtained coated lens.

10. A method according to any of the preceding claims, wherein the abrasion resistant coating (20) has a first surface (22) in contact with the base lens substrate and a second surface (21) opposite the first, wherein each microlens (30) of the base lens substrate is convex, the first surface (22) of the abrasion resistant coating is concave, and the second surface of the abrasion resistant coating is convex (21).

11. A method according to any of the preceding claims, wherein providing the base lens substrate (10) comprises:
moving first and second primary mold portions (81, 82) of a primary mold (80) from an open position to a closed position in which the primary mold portions cooperate to define a first mold cavity, each of the primary mold portions defining a molding surface;
introducing a first moldable material into the first mold cavity;
setting the first moldable material to form the base lens substrate having the opposite first and second optical surfaces, wherein the molding surface of the second primary mold portion defines at least one recess suitable for forming the at least one microlens protruding from its second optical surface.

12. An optical article (1) comprising:
- a base lens substrate (10), having two opposite main surfaces (101, 102), the base lens substrate comprising at least one microlens (30) protruding from one of the main surfaces (102), and
- an abrasion resistant coating (20), covering at least the main surface (102) from which the microlens (30) protrudes, such that the abrasion resistant coating encapsulates each microlens (30),
wherein the optical article is obtained by implementing the method according to any of the preceding claims.

13. An optical article (1) according to the preceding claim, wherein the thickness of the abrasion resistant coating (20) is minimal at the protruding microlens (30).

14. An optical article according to any of claims 12 or 13, wherein the minimal thickness of the abrasion resistant coating, at the protruding microlens (30) is inferior or equal to 2µm, preferably comprised between 1 and 2 µm.

15. An optical article (1) according to any of claims 12 to 14, wherein each protruding microlens (30) has a dimension, measured in a direction perpendicular to the surface (102) carrying it, less than 0.1 mm, preferably comprised between 10 and 20 µm.

## Patentansprüche

1. Verfahren zur Bildung eines optischen Artikels (1), wobei das Verfahren umfasst:
Bereitstellen (100) eines Basislinsensubstrats (10) mit gegenüber liegenden ersten (101) und zweiten (102) optischen Oberflächen und mindestens einer Mikrolinse (30), die von der zweiten optischen Oberfläche (102) vorspringt,
Platzieren (210) des Basislinsensubstrats (10) in einem Formwerkzeug (90), das erste (91) und zweite (92) Formwerkzeuganteile umfasst, so dass die erste optische Oberfläche (101) auf einer Formungsoberfläche (91') des ersten Formwerkzeuganteils (91) angeordnet ist, und dass zwischen einer Formungsoberfläche (92') des zweiten Formwerkzeuganteils (92) und der zweiten optischen Oberfläche (102) ein Volumen (V) definiert wird,
Füllen (220) des Volumens mit einem formbaren Material (M), das zur Bildung von abriebbeständiger Beschichtung geeignet ist; und
Abbindenlassen (300) des formbaren Materials, um eine abriebbeständige Beschichtung (20) über dem Basislinsensubstrat (10) zu bilden, wobei die abriebbeständige Beschichtung (20) jede Mikrolinse (30) verkapselt.

2. Verfahren nach Anspruch 1, wobei die Formungsoberfläche (92') des zweiten Formwerkzeuganteils (92) die gleiche Basiskurve wie die Basiskurve der zweiten optischen Oberfläche (102) des Basislinsensubstrats (10) aufweist.

3. Verfahren nach Anspruch 1 oder 2, wobei der Schritt des Abbindenlassens des Materials, das zur Bildung der abriebbeständigen Beschichtung geeignet ist, durch UV- oder thermisches Härten oder Kombination von beiden durchgeführt wird.

4. Verfahren nach einem der vorhergehenden Ansprüche, wobei Füllen des Volumens mit einem formbaren Material Injizieren des formbaren Materials zum Füllen des Volumens oder Einführen des formbaren Materials im gestaltbaren Zustand in das Volumen und Schließen des Formwerkzeugs umfasst, um einen Druck auf das formbare Material auszuüben, damit es sich über das Basislinsensubstrat ausbreitet.

5. Verfahren nach Anspruch 1 bis 4, wobei das formbare Material einen Brechungsindex n_{c} aufweist, der niedriger als der Brechungsindex nₘ des Materials ist, welches die Mikrolinse bildet.

6. Verfahren nach Anspruch 5, wobei die Differenz zwischen dem Brechungsindex nₘ des formbaren Materials und dem Brechungsindex n_{c} des Materials, welches die Mikrolinse bildet, größer oder gleich 0,1 ist.

7. Verfahren nach einem der Ansprüche 1 bis 4, wobei das formbare Material einen optischen Index n_{c} aufweist, der größer als der optische Index nₘ des Materials ist, welches die Mikrolinse bildet.

8. Verfahren nach einem der vorhergehenden Ansprüche, des Weiteren umfassend Abscheiden von mindestens einer zusätzlichen Beschichtung (50) auf der abriebbeständigen Beschichtung (20), wobei die zusätzliche Beschichtung eine Polyurethanbeschichtung, eine Antireflexionsbeschichtung, eine photochrome Beschichtung, eine schmutzabweisende Beschichtung, eine Antibeschlagbeschichtung, eine abtönbare Beschichtung, eine selbstheilende Beschichtung, eine Antiregenbeschichtung, eine Antistatikbeschichtung, eine Anti-UV-Beschichtung oder eine Antiblaulichtbeschichtung umfasst.

9. Verfahren nach einem der vorhergehenden Ansprüche, wobei das Basislinsensubstrat (10) eine halbfertige Linse ist und das Verfahren des Weiteren Oberflächenbearbeitung und/oder Einschleifen der erhaltenen beschichteten Linse umfasst.

10. Verfahren nach einem der vorhandenen Ansprüche, wobei die abriebbeständige Beschichtung (20) eine erste Oberfläche (22) in Kontakt mit dem Basislinsensubstrat und eine zweite Oberfläche (21) gegenüber der ersten aufweist, wobei jede Mikrolinse (30) des Basislinsensubstrats konvex ist, die erste Oberfläche (22) der abriebbeständigen Beschichtung konkav ist, und die zweite Oberfläche der abriebbeständigen Beschichtung konvex (21) ist.

11. Verfahren nach einem der vorhergehenden Ansprüche, wobei Bereitstellen des Basislinsensubstrats (10) umfasst:
Bewegen von ersten und zweiten Primärformwerkzeuganteilen (81, 82) eines Primärformwerkzeugs (80) aus einer offenen Position in eine geschlossene Position, in der die Primärformwerkzeuganteile zusammenwirken, um einen ersten Formwerkzeughohlraum zu definieren, wobei jeder der Primärformwerkzeuganteile eine Formungsoberfläche definiert;
Einbringen eines ersten formbaren Materials in den ersten Formwerkzeughohlraum;
Abbindenlassen des ersten formbaren Materials, um das Basislinsensubstrat mit den gegenüber liegenden ersten und zweiten optischen Oberflächen zu bilden, wobei die Formungsoberfläche des zweiten Primärformwerkzeuganteils mindestens eine Aussparung definiert, die zum Bilden der mindestens einen Mikrolinse geeignet ist, die von ihrer zweiten optischen Oberfläche vorspringt.

12. Optischer Artikel (1), umfassend:
- ein Basislinsensubstrat (10) mit zwei gegenüber liegenden Hauptoberflächen (101, 102), wobei das Basislinsensubstrat mindestens eine Mikrolinse (30) umfasst, die von einer der Hauptoberflächen (102) vorspringt, und
- eine abriebbeständige Beschichtung (20), die mindestens die Hauptoberfläche (102) bedeckt, von der die Mikrolinse (30) vorspringt, so dass die abriebbeständige Beschichtung jede Mikrolinse (30) verkapselt,
wobei der optische Artikel durch Implementieren des Verfahrens gemäß einem der vorhergehenden Ansprüche erhalten wird.

13. Optischer Artikel (1) nach einem der vorhergehenden Ansprüche, wobei die Dicke der abriebbeständigen Beschichtung (20) an der vorspringenden Mikrolinse (30) minimal ist.

14. Optischer Artikel nach einem der Ansprüche 12 oder 13, wobei die minimale Dicke der abriebbeständigen Beschichtung an der vorspringenden Mikrolinse (30) kleiner oder gleich 2 µm ist und vorzugsweise zwischen 1 und 2 µm liegt.

15. Optischer Artikel (1) nach einem der Ansprüche 12 bis 14, wobei jede vorspringende Mikrolinse (30) eine Abmessung, gemessen in einer Richtung senkrecht zu der Oberfläche (102), die sie trägt, von weniger als 0,1 mm und vorzugsweise zwischen 10 und 20 µm hat.

## Revendications

1. Procédé de formation d'un article optique (1), le procédé comprenant :
l'obtention (100) d'un substrat de lentille de base (10) ayant des première (101) et deuxième (102) surfaces optiques opposées, et au moins une microlentille (30) faisant saillie depuis la deuxième surface optique (102),
la mise en place (210) du substrat de lentille de base (10) dans un moule (90) comprenant des première (91) et deuxième (92) parties de moule de telle sorte que la première surface optique (101) soit disposée sur une surface de moulage (91') de la première partie de moule (91), et qu'un volume (V) soit défini entre une surface de moulage (92') de la deuxième partie de moule (92) et la deuxième surface optique (102),
le remplissage (220) du volume (V) avec un matériau moulable (M) approprié pour former un revêtement résistant à l'abrasion ; et
la prise (300) du matériau moulable pour former un revêtement résistant à l'abrasion (20) sur le substrat de lentille de base (10), dans lequel le revêtement résistant à l'abrasion (20) encapsule chaque microlentille (30).

2. Procédé selon la revendication 1, dans lequel la surface de moulage (92') de la deuxième partie de moule (92) a la même courbe de base que la courbe de base de la deuxième surface optique (102) du substrat de lentille de base (10).

3. Procédé selon la revendication 1 ou 2, dans lequel l'étape de prise du matériau approprié pour former un revêtement résistant à l'abrasion est effectuée par durcissement aux UV ou thermique, ou une combinaison des deux.

4. Procédé selon l'une quelconque des revendications précédentes, dans lequel le remplissage du volume avec un matériau moulable comprend l'injection du matériau moulable pour remplir le volume, ou l'insertion dans le volume du matériau moulable dans un état malléable, et la fermeture du moule pour exercer une pression sur le matériau moulable afin qu'il s'étale sur le substrat de lentille de base.

5. Procédé selon les revendications 1 à 4, dans lequel le matériau moulable a un indice de réfraction n_{c} inférieur à l'indice de réfraction nₘ du matériau formant la microlentille.

6. Procédé selon la revendication 5, dans lequel la différence entre l'indice de réfraction nₘ du matériau moulable et l'indice de réfraction n_{c} du matériau formant la microlentille est supérieure ou égale à 0,1.

7. Procédé selon l'une quelconque des revendications 1 à 4, dans lequel le matériau moulable a un indice optique n_{c} supérieur à l'indice optique nₘ du matériau formant la microlentille.

8. Procédé selon l'une quelconque des revendications précédentes, comprenant en outre le dépôt d'au moins un revêtement supplémentaire (50) sur le revêtement résistant à l'abrasion (20), ledit revêtement supplémentaire comprenant un revêtement de polyuréthane, un revêtement antireflet, un revêtement photochromique, un revêtement antisalissure, un revêtement antibuée, un revêtement teintable, un revêtement autocicatrisant, un revêtement anti-pluie, un revêtement antistatique, un revêtement anti-UV, ou un revêtement anti-lumière bleue.

9. Procédé selon l'une quelconque des revendications précédentes, dans lequel le substrat de lentille de base (10) est une lentille semi-finie et le procédé comprend en outre le surfaçage et/ou le détourage de la lentille revêtue obtenue.

10. Procédé selon l'une quelconque des revendications précédentes, dans lequel le revêtement résistant à l'abrasion (20) a une première surface (22) en contact avec le substrat de lentille de base et une deuxième surface (21) à l'opposé de la première, dans lequel chaque microlentille (30) du substrat de lentille de base est convexe, la première surface (22) du revêtement résistant à l'abrasion est concave, et la deuxième surface du revêtement résistant à l'abrasion est convexe (21).

11. Procédé selon l'une quelconque des revendications précédentes, dans lequel l'obtention du substrat de lentille de base (10) comprend :
le déplacement de première et deuxième parties de moule principal (81, 82) d'un moule principal (80) depuis une position ouverte jusqu'à une position fermée dans laquelle les parties de moule principal coopèrent pour définir une première cavité de moule, chacune des parties de moule principal définissant une surface de moulage ;
l'introduction d'un premier matériau moulable dans la première cavité de moule ;
la prise du premier matériau moulable pour former le substrat de lentille de base ayant des première et deuxième surfaces optiques opposées, dans lequel la surface de moulage de la deuxième partie de moule principal définit au moins une encoche appropriée pour former l'au moins une microlentille faisant saillie depuis sa deuxième surface optique.

12. Article optique (1) comprenant :
- un substrat de lentille de base (10), ayant deux surfaces principales opposées (101, 102), le substrat de lentille de base comprenant au moins une microlentille (30) faisant saillie depuis une des surfaces principales (102), et
- un revêtement résistant à l'abrasion (20), recouvrant au moins la surface principale (102) depuis laquelle la microlentille (30) fait saillie, de telle sorte que le revêtement résistant à l'abrasion encapsule chaque microlentille (30),
dans lequel l'article optique est obtenu par mise en œuvre du procédé selon l'une quelconque des revendications précédentes.

13. Article optique (1) selon la revendication précédente, dans lequel l'épaisseur du revêtement résistant à l'abrasion (20) est minimale au niveau de la microlentille en saillie (30).

14. Article optique selon l'une quelconque des revendications 12 et 13, dans lequel l'épaisseur minimale du revêtement résistant à l'abrasion, au niveau de la microlentille en saillie (30), est inférieure ou égale à 2 µm, de préférence comprise entre 1 et 2 µm.

15. Article optique (1) selon l'une quelconque des revendications 12 à 14, dans lequel chaque microlentille en saillie (30) a une dimension, mesurée dans une direction perpendiculaire à la surface (102) la portant, inférieure à 0,1 mm, de préférence comprise entre 10 et 20 µm.
